# EUROPEAN PATENT SPECIFICATION

(11) **EP 2 463 970 B1**
(45) Date of publication and mention of the grant of the patent: **09.03.2016**
(21) Application number: 11191874.4
(22) Date of filing: 05.12.2011
(51) Int. Cl.: H01S 3/067, H01S 3/16, H01S 3/17

(54) **Rare-earth-doped optical fiber**
Mit seltenen Erden dotierte Glasfaser
Fibre optique dopée en terres rares

(30) Priority: 10.12.2010 FR 1060398
(43) Date of publication of application: 13.06.2012
(73) Proprietor: Draka Comteq B.V., 1083 HJ Amsterdam (NL)
(72) Inventor: Boivin, David, 91160 Longjumeau (FR); Pastouret, Alain, 91300 Massy (FR); Burov, Ekaterina, 92100 Boulogne-Billancourt (FR); Gonnet, Cédric, 75014 Paris (FR)
(74) Representative: Algemeen Octrooi- en Merkenbureau B.V.

(56) References cited:
- EP-A1- 2 086 071
- FR-A1- 2 939 246
- US-A1- 2010 118 388
- DAVID BOIVIN ET AL: "Quenching investigation on New Erbium Doped Fibers using MCVD Nanoparticle Doping Process", PROCEEDINGS OF SPIE, THE INTERNATIONAL SOCIETY FOR OPTICAL ENGINEERING SPIE, USA, vol. 7580, 1 January 2010 (2010-01-01), pages 75802B-1, XP007918435, ISSN: 0277-786X
- PATRA A ET AL: "Sonochemical Preparation and Characterization of Eu2O3 and Tb2O3 Doped in and Coated on Silica and Alumina Nanoparticles", JOURNAL OF PHYSICAL CHEMISTRY PART B: CONDENSED MATTER, MATERIALS, SURFACES, INTERFACES & BIOPHYSICAL, AMERICAN CHEMICAL SOCIETY, US, vol. 103, no. 17, 29 April 1999 (1999-04-29), pages 3361-3365, XP002583967, ISSN: 1520-6106, DOI: DOI:10.1021/JP984766L [retrieved on 1999-04-13]
- PASTOURET A ET AL: "Nanoparticle doping process for improved fibre amplifiers and lasers", PROCEEDINGS OF SPIE, THE INTERNATIONAL SOCIETY FOR OPTICAL ENGINEERING SPIE, USA, vol. 7195, 26 January 2009 (2009-01-26), XP009116595, ISSN: 0277-786X

## Description

The present invention relates to the field of optical fibers, and, more specifically, to an optical fiber doped with elements from the rare-earth group (referred to below as "rare earths").

An optical fiber (i.e., a glass fiber typically surrounded by one or more coating layers) conventionally comprises an optical fiber core which transmits and/or amplifies an optical signal, and an optical cladding which confines the optical signal within the optical fiber core (i.e., the central core). Accordingly, the refractive index of the core n_{c} is typically greater than the refractive index of the optical cladding n_{g} (i.e., n_{c} > n_{g}). The refractive index difference between the central core and the cladding is typically obtained by introducing dopants into the central core and/or the cladding.

Typically, the core and the optical cladding are obtained by vapor deposition, such as inside chemical vapor deposition (CVD), outside vapor deposition (OVD), vapor axial deposition (VAD), etc.. With an inside CVD type method, the outer cladding is constituted by the deposition tube and possibly also by overcladding or by sleeving. The central core is formed of a matrix optionally including doping elements. The core matrix is generally made of silica. In general, elements that are not very volatile (e.g., rare earths, aluminum, etc.) are incorporated by impregnating a porous silica bar during a CVD operation for forming the core of the primary preform. With rare earths, impregnation may be performed, for example, using a solution having rare earths obtained from dissolved salts. Once inserted in the core, the rare earths are present in their ionic form.

Optical fibers doped with rare earths are commonly used in numerous optical applications. In particular, optical fibers doped with rare earths may be used as line amplifiers for broadband transmission.

Erbium-doped optical fibers may be used in long distance optical telecommunications systems to amplify optical signals. Such optical fibers are used in erbium-doped fiber amplifiers (EDFAs) and have a core comprising a silica matrix containing rare earths, such as erbium at concentrations on the order of 250 parts per million (ppm) to 1,000 ppm by weight (i.e., 0.025 weight percent (weight%) to 0.1 weight%).

Optical amplification in a rare-earth-doped fiber operates by injecting a so-called "pump" signal into the optical fiber. The pump signal excites the rare earth ions. When an incident signal passes through this portion of optical fiber, the rare earth ions de-excite and, by simulated emission, produce photons that are substantially identical to those from the incident signal. The incident signal is thus amplified.

The gain "shape" of an amplifying optical fiber designates the value of its gain as a function of the wavelength of the incident signal. The gain "width" designates the range of wavelengths over which the gain remains greater than a predetermined value. For example, an erbium-doped optical fiber is advantageously used in band C (1530 nanometers to 1565 nanometers). An erbium-doped fiber conventionally presents a gain width of about 30 nanometers to 35 nanometers in the C-band.

Optical fibers that are strongly doped with rare earth ions are attracting more and more interest. Firstly, increasing the quantity of rare earth ions in an optical fiber makes it possible to increase its gain per unit length and thus to reduce the length of optical fiber that is needed for achieving given amplification. Thus, the cost and the size of the system including the amplifying optical fiber are reduced. Furthermore, a strongly doped optical fiber is particularly suitable for amplification in the L-band (1565 nanometers to 1625 nanometers).

Nevertheless, when the concentration of rare earth ions in the matrix of the optical fiber core becomes high, the mean distance between two adjacent rare earths decreases. This gives rise to the formation of rare-earth pairs, or, indeed, of rare-earth aggregates in the core matrix, thereby creating doping non-uniformities. This reduction in the mean distance between rare earths increases the probability of neighboring rare earths interacting with one another. The energy delivered to the optical fiber by the pump signal suffers losses as a result of these energy transfers between neighboring rare earths. The simultaneous existence of mechanisms other than those that give rise to amplification thus degrades the amplification efficiency of the optical fiber.

Two main interaction mechanisms between neighboring rare earths are homogeneous upconversion (HUC) and pair-induced quenching (PIQ). The effects of these mechanisms depend strongly on the distance between the rare earths.

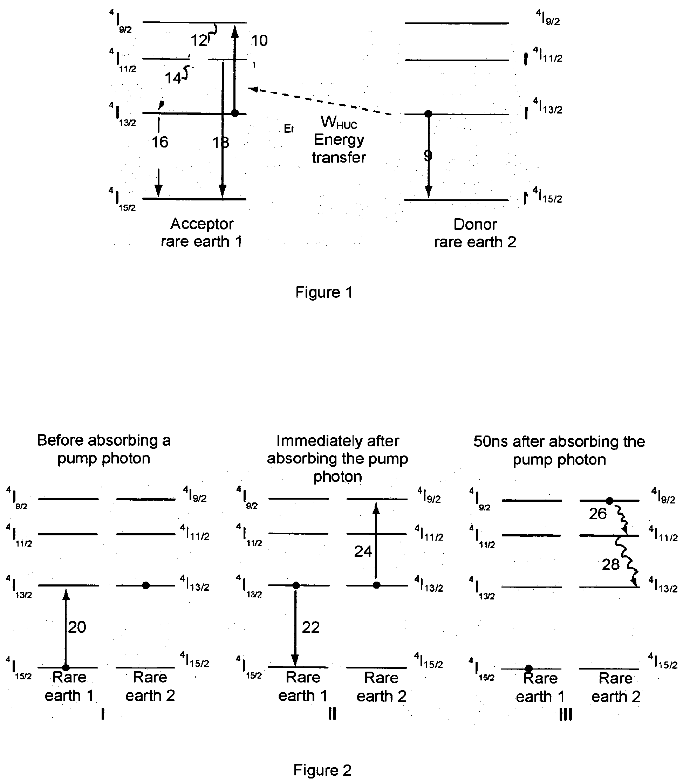

Homogeneous upconversion takes place between rare earths that are distributed uniformly with the distance between them being on the order or a nanometer. This mechanism can be better understood by making reference to Figure 1, which is an energy diagram for two neighboring rare earths. Because of their proximity, an acceptor rare earth 1 receives energy W_{HUC} from a donor rare earth 2. The rare earth 2 is subjected to relaxation 9 towards a fundamental energy state ⁴I_{15/2}. It can then contribute to amplifying the incident signal only if it is once more excited by a pump photon. The energy transfer W_{HUC} serves to excite the rare earth 1 from a metastable energy level ⁴I_{13/2} to an energy level ⁴I_{9/2} (excitation 10). Thereafter, the rare earth 1 relaxes towards energy state ⁴I_{13/2}.

This relaxation may include passing via energy state ⁴I_{13/2}. Under such circumstances, the rare earth 1 is subjected to relaxation 12 from the state ⁴I_{9/2} to state ⁴I_{13/2}, and then to relaxation 14 from state ⁴I_{11/2} to state ⁴I_{13/2}. The relaxations 12 and 14 do not radiate (i.e., no photon is emitted at the wavelength that corresponds to the energy difference between the energy levels). In contrast, the energy difference is dissipated in the form of heat (thermal effect) or in the form of a vibration wave or phonon (i.e., a wave that is acoustic and not optical).

In the presence of an incident signal photon, the rare earth 1 is subjected to relaxation 16 from state ⁴I_{13/2} to energy state ⁴I_{15/2}, thus producing a photon identical to the incident signal photon. This simulated emission enables the incident signal to be amplified. However the energy balance of the system constituted by the two rare earths shows that two pump photons have produced one incident signal photon. If the HUC mechanism does not occur, then two pump photons would have given rise to two incident signal photons. Homogeneous upconversion thus degrades the efficiency of the optical amplification mechanism.

The relaxation 18 is very unlikely. If it does occur, however, then two pump photons are consumed but no photon is obtained for amplifying the incident signal. In the presence of an incident signal photon, the relaxation 18 forms a photon at the wavelengths of the incident signal, but having properties that are different from those of the incident signal photon. The photon is emitted in a random direction and with a random phase. The photon emitted by the relaxation 18 therefore cannot be used for amplifying the incident signal.

Pair-induced quenching is known for example from the publication *"*Modeling of pair-induced quenching in erbium-doped silicate fibers", IEEE Photonics Technology Letters, Vol. 5, No. 1, 1993, pp. 73 to 75, by Delevaque et al. The PIQ mechanism appears when two rare earths are very close together. This happens when the rare earths are separated by a distance of the same order as their diameter (e.g., 0.2 nanometer). The two rare earths are then coupled together so strongly that they form a pair. They cannot be excited together to energy state ⁴I_{13/2} in stable manner. This can be better understood by referring to Figure 2, which is an energy diagram for a pair comprising two rare earths.

In a phase I, the rare earth 1 is in energy state ⁴I_{15/2} and the rare earth 2 is in energy state ⁴I_{13/2}. On absorbing a pump photon, the rare earth 1 is subjected to an excitation 20 to state ⁴I_{13/2}. Immediately after the pump signal has passed, the pair is in a phase II: both rare earths are in state ⁴I_{13/2}. This phase is of very short duration compared with the time scales of the PIQ mechanism. The rare earth 1 is subjected to a relaxation 22 to state ⁴I_{15/2}, thus transferring energy to the rare earth 2. By means of this energy, the rare earth 2 is subjected to an excitation 24 towards state ⁴I_{9/2}. The pair is then in a phase III. The pair remains in phase III for about 50 nanoseconds (ns). However, the rare earth 2 does not remain in state ⁴I_{13/2}, and it is subjected to non-radiating relaxations 26 and 28 that return it to state ⁴I_{13/2}. Thus, at the end of the PIQ mechanism, only the rare earth 2 is available for amplifying the incident signal. A pump photon has been absorbed without being made available for amplifying the incident signal. Without the PIQ mechanism, the rare earths 1 and 2 would both be available for amplification.

The performance of the rare-earth-doped optical fiber is thus highly dependent on the distances between the rare earths.

One solution includes reducing the quantity of rare earths and in increasing the length of the optical fiber to achieve a given amplification gain. By reducing the quantity of rare earths, the mean distance between the adjacent rare earths increases. Thus, the probability of the PIQ and HUC mechanisms decreases. For example, an amplifier having a gain of 80 decibels (dB) may be made with 2 meters (m) of rare-earth-doped optical fiber presenting a gain of 40 decibels per meter (dB/m), or with 8 meters of a rare-earth-doped optical fiber presenting a gain of 10 dB/m. Nevertheless, increasing the length of the optical fiber increases the size of the amplifier.

Another solution includes inserting codopants, or complementary dopants, together with the rare earths. These codopants serve to improve amplification by preventing interactions between the rare earths. For example, alumina is known to improve the gain flatness that is needed in broadband amplification, and to reduce the aggregation of rare earths (e.g. erbium). To be effective, the codopants need to surround the rare earth ions. While the optical fiber is being doped by a solution containing rare earths, the concentration of codopants is very high to ensure that each rare earth ion in the core is surrounded by codopants. However, the quantity of codopants that can be inserted into the core is limited, because such codopants can modify the refractive index of the core and increase background losses and/or modify gain shape.

Also known are core matrices that enable energy transfers between rare earth ions to be reduced. Such core matrices are therefore capable of receiving large quantities of rare earth ions. For example, phosphate glass and fluoride glass are known (i.e. glass containing phosphorous or fluorine). A glass ceramic or ZBLA (ZrF₄-BaF₂-LaF₃-AlF₃) matrix is also known. These matrices may present drawbacks. For example, fluoride or phosphate glasses are very sensitive to hydroxide ions and poor at withstanding moisture. Furthermore, optical fibers including such matrices are difficult to make compatible with standard optical fibers in which the core matrices are generally made of silica. For example it is difficult to weld a splice between an optical fiber that includes such a matrix and a standard optical fiber.

The publication *"*Potential of nanoparticle technologies for next generation erbium-doped fibers", OFC2004 Technical Digest, FB5, 2004 by S. Tammela et al., describes an optical fiber fabrication method including direct nanoparticle deposition (DND). The authors make use of outside vapor deposition in which the glass having dopant precursors is heated by the flame of a specially-designed torch. The glass and the precursors react to form rare-earth soots. The DND technique enables the rare earths to be dispersed uniformly even at high concentrations. The chemical environment of the rare earths (i.e., the atoms immediately neighboring each rare earth) mainly determine the fluorescence properties of the rare earths that contribute to the main gain characteristics. The rare earths are inserted in the core matrix. The environment of a rare earth thus depends on the composition of the matrix of the core. The DND technique is a random method that does not enable the chemical environment around rare earths to be controlled. Thus, the DND technique does not make it possible to improve the amplification efficiency of the optical fiber for given gain.

It is known to perform rare-earth doping by means of nanoparticles using a modified chemical vapor deposition (MCVD) process. Because the nanoparticle matrix surrounds the rare earth ion, there is better control over the environment of each rare earth ion. For example, European patent application publication 2 194 408 describes optical fibers having nanoparticles in the core of the optical fiber. The nanoparticles include rare earth ions.

European patent application publication 2 194 620 describes an optical fiber in which it is possible to concentrate the rare earths in the nanoparticles by avoiding photo-blackening, a parasitic mechanism due to defects present in the silica. Nevertheless, that document does not describe how to eliminate the PIQ and HUC mechanisms.

European patent application publication 2 187 486 describes an optical fiber having rare-earth-doped nanoparticles in which the distance between the rare earth ions is greater than 0.8 nanometers so as to avoid the PIQ mechanism. However, the optical fiber does not take the HUC mechanism into account.

European patent application publication 2 091 115 is also known that describes an optical fiber including nanoparticles. Each nanoparticle presents a matrix of aluminum containing rare earth ions. The nanoparticles also include a non-doped metal layer on the outside (e.g., having a thickness of 9 micrometers (µm)). The metallic outer layer of each nanoparticle contributes to improving amplification by a surface plasmon resonance (SPR) phenomenon. Nevertheless, that document does not describe how to eliminate the PIQ and HUC mechanisms.

Thus, there is a need for a rare-earth-doped optical fiber in which the PIQ and HUC mechanisms are attenuated.

### Summary of the invention

In one aspect, the present invention invention provides an optical fiber comprising:
a central core comprising a core matrix and nanoparticles; said core matrix surrounding said nanoparticles; said central core adapted to conveying an optical signal; and
an optical cladding surrounding said central core and adapted to confine the optical signal conveyed in the central core;
wherein said nanoparticles comprise rare-earth dopant elements, a nanoparticle matrix and an outer layer; said nanoparticle matrix surrounding said rare-earth dopant elements and said outer layer surrounding said nanopatricle matrix;
   wherein, within said nanoparticles, the atomic ratio of nanoparticle matrix atoms other than oxygen to rare-earths dopant element atoms is between 300 and 1000; and
wherein said outer layer is formed of an outer layer matrix that is substantially free from any rare-earth dopant element atoms, and said outer layer has a thickness of between 1 nanometer and 2 nanometer.

In an embodiment, the core matrix is made of silica.

In an embodiment, the nanoparticle matrix comprises alumina (Al₂O₃) and/or silica (SiO₂).

In an embodiment, the outer layer of the nanoparticles is made of alumina (Al₂O₃), silica (SiO₂), or a combination thereof.

In an embodiment, the doping elements of the group of rare earths are selected from: erbium (Er); ytterbium (Yb); thulium (Tm); or a combination thereof.

In an embodiment, the nanoparticles present an atom ratio between the number of nanoparticle matrix atoms other than oxygen and the number of atoms of rare earths that lies in the range 350 to 550.

In an embodiment, the percentage by weight of the nanoparticle matrix in the core lies in the range 0.5 weight% to 3.5 weight%.

In an embodiment, the nanoparticles are substantially spherical, with a diameter lying in the range 5 nm to 50 nm.

In an embodiment, the concentration of doping elements from the group of rare earths in the core lies in the range 250 ppm to 1500 ppm.

In an embodiment, the matrix of the core further includes an additional dopant that contributes to the refractive index difference between the core and the optical cladding. The additional dopant may be selected from: germanium; fluorine; aluminum; phosphorous; or a combination thereof.

The invention also provides an optical fiber laser including at least one portion of fiber according to the present invention. The invention also provides an optical amplifier including at least one portion of fiber according to the present invention, and using a pump power lying in the range 60 milliwatts (mW) to 1.5 watts (W).

In other words, the invention provides in an aspect an optical fiber comprising a central core adapted to conveying an optical signal; and an optical cladding surrounding the core and adapted to confine the optical signal conveyed in the core. The core being constituted by a core matrix containing nanoparticles. Said nanoparticles being constituted by a nanoparticle matrix surrounded by an outer layer. Said nanoparticle matrix including doping atoms from the group of rare earths at a concentration such that the atom ratio between the number of nanoparticle matrix atoms other than oxygen and the number of atoms of rare earths lies in the range 300 to 1000. Said outer layer consists in an outer layer matrix that is substantially free from any atoms of rare earths, and has thickness lying in the range 1 nm to 2 nm.

Preferably, said core matrix is made of silica. Preferably, said nanoparticle matrix comprises alumina (Al₂O₃) and/or silica (SiO₂). Preferably said outer layer of the nanoparticles is made of (Al₂O₃), silica (SiO₂), or a combination thereof. Preferably, said doping elements of the group of rare earths are selected from: erbium (Er); ytterbium (Yb); thulium (Tm); or a combination thereof. Preferably, said nanoparticles present an atom ratio between the number of nanoparticle matrix atoms other than oxygen and the number of atoms of rare earths that lies in the range 350 to 550. Preferably, the percentage by weight of the nanoparticle matrix in the core lies in the range 0.5 weight% to 3.5 weight%. Preferably, said nanoparticles are substantially spherical, with a diameter lying in the range 5 nm to 50 nm. Preferably, said concentration of doping elements from the group of rare earths in the core lies in the range 250 ppm to 1500 ppm. Preferably said matrix of the core further includes an additional dopant that contributes to the refractive index difference between the core and the optical cladding. Preferably, said additional dopant is selected from: germanium; fluorine; aluminum; phosphorous; or a combination thereof

In another embodiment, the present invention relates to an optical fiber, comprising a central core surrounded by an optical cladding, said central core comprising nanoparticles dispersed within a core matrix; wherein said nanoparticles comprise an outer layer surrounding rare-earth dopants dispersed within a nanoparticle matrix, said outer layer being substantially free from rare-earth dopants; wherein, for at least 80 percent of said nanoparticles, the average distance d₁ separating adjacent rare-earth dopants within the same nanoparticle is at least about 2 nanometers; and wherein, for at least 80 percent of said nanoparticles, the distance d₂ separating rare-earth dopants within different nanoparticles is at least about 2 nanometers.

Preferably, for at least 90 percent of said nanoparticles, (*i*) the average distance d₁ separating adjacent rare-earth dopants within the same nanoparticle is at least about 2 nanometers, and *(ii)* the distance d₂ separating rare-earth dopants within different nanoparticles is at least about 2 nanometers. Preferably, for at least 95 percent of said nanoparticles, (*i*) the average distance d₁ separating adjacent rare-earth dopants within the same nanoparticle is at least about 2 nanometers, and (*ii*) the distance d₂ separating rare-earth dopants within different nanoparticles is at least about 2 nanometers. Preferably, said nanoparticle matrix comprises alumina and/or silica; and the concentration of said nanoparticle matrix within said central core is between about 0.5 weight percent and 3.5 weight percent. Preferably, said rare-earth dopants are erbium (Er), ytterbium (Yb), and/or thulium (Tm); and the concentration of said rare-earth dopants within said central core is between about 250 ppm and 1,500 ppm.

Other characteristics and advantages according to the present invention appear on reading the following description of embodiments according to the present invention given by way of example and with reference to the accompanying drawings.

### BRIEF DESCRIPTION OF THE DRAWINGS

Figure 1 (described above) is an energy diagram relating to two rare earths when an HUC mechanism occurs.
Figure 2 (described above) is an energy diagram relating to two rare earths when a PIQ mechanism occurs.
Figure 3 schematically depicts an example of an optical fiber according to the present invention.

### DETAILED DESCRIPTION OF THE INVENTION

In one aspect, the invention seeks to reduce the above-described PIC and HUC mechanisms. There exists a minimum distance between rare earths, below which energy transfers occur between adjacent rare earths. In the optical fiber of the present invention, the nanoparticles include an outer layer and a controlled atomic ratio (or atom ratio) between the number of atoms in the nanoparticle matrix other than oxygen and the number of atoms of rare earths. This atomic ratio makes it possible to control the environment of the rare earths so as to obtain a mean distance between rare earths that is greater than aforementioned minimum distance. Thus, in the optical fiber according to the present invention, parasitic energy transfers between rare earths are attenuated, or even eliminated.

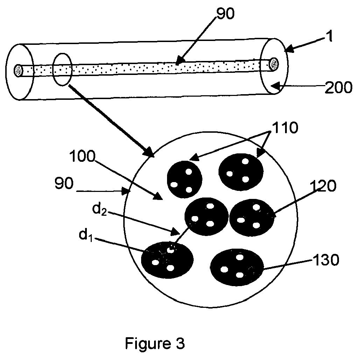

An example of the optical fiber according to the present invention is described below with reference to Figure 3, which is a diagram of an optical fiber 1 according to the present invention with an enlargement of the central core 90 of the optical fiber 1. The optical fiber 1 has a central core 90 suitable for conveying an optical signal, and optical cladding 200 surrounding the central core 90 that is suitable for confining the optical signal that is being conveyed in the central core 90.

The central core 90 of the optical fiber according to the present invention is formed of a core matrix 100 and nanoparticles 110. For example, the core matrix 100 is based on silica.

In an embodiment, the core matrix 100 comprises an additional dopant (not shown) that contributes to the refractive index difference between the central core 90 and the optical cladding 200. For example, the additional dopant may be germanium, fluorine, aluminum, phosphorous, or a combination of these elements. For example, the concentration in additional dopants lies in the range 1 weight% to 10 weight%.

In a particular example, the core matrix 100 is made of silica and the additional dopant is germanium.

The central core 90 presents a refractive index difference with respect to to the optical cladding that makes it possible to obtain optical signal guidance properties. For example, the refractive index difference relative to the optical cladding lies in the range 10x10⁻³ to 30x10⁻³.

The core matrix 100 surrounds nanoparticles 110 (e.g. the nanoparticles are dispersed within the core matrix). The nanoparticles 110 are doped with rare earth ions (viz. rare-earth dopant elements) 130. Each nanoparticle 110 is made of a nanoparticle matrix 120 that surrounds rare earths 130 (e.g. the rare earth dopant elements are dispersed within the nanoparticle matrix). Doping with nanoparticles 110 thus makes it possible to obtain a better dispersion of the rare earths 130 than doping that makes use of impregnation via dissolved salts.

The composition and the structure of the nanoparticle matrix 120 encourage the dissolution of rare earths 130. This nanoparticle matrix 120 may be distinct from the matrix 100 of the central core 90. The rare earths are in ionic form with charge that is balanced by the oxygen ions present in the nanoparticle matrix 120. The nanoparticle matrix 120 comprises one or more chemical elements in oxidized form. The matrix 120 of the nanoparticles 110 comprises one or more oxides that enable the rare earths 130 that provide the gain properties of the optical fiber 1 to be dissolved uniformly while maintaining a physical barrier between the rare earths 130 and the crystal defects of the core matrix 100. The nanoparticle matrix 120 does not contribute defects that are troublesome for emission efficiency as a function of utilization time. In addition, the nanoparticle matrix 120 withstands the conditions of fabricating the optical fiber 1. The nanoparticle matrix 120 may comprise, for example: silica SiO₂ and/or alumina Al₂O₃. Alumina provides a good distribution of rare earths within a nanoparticle 110 and makes it possible to widen the amplification gain in the spectrum window for wavelength division multiplexing (WDM) applications.

The nanoparticles 110 present an atomic ratio between the number of nanoparticle matrix atoms other than oxygen and the number of atoms of rare earths 130 that lies in the range 300 to 1000, and preferably in the range 350 to 550. The atomic ratio designates the ratio of the quantity of matrix atoms other than oxygen to the quantity of rare earth atoms present in the nanoparticles. This range of values makes it possible to obtain an average distance d₁ between the rare earths 130 contained within a given nanoparticle 110 that is greater than or equal to 2 nanometer. Firstly, the PIQ mechanism takes place when rare earths 130 are spaced apart by a distance lying in the range 0.2 nanometer to 0.4 nanometer. Secondly, the HUC mechanism takes place when the rare earths 130 are spaced apart by a distance of less than 2 nanometer. Thus, in the optical fiber 1 of the invention, the distance d₁ between rare earths 130 in a nanoparticle 110 is sufficiently great to reduce or even eliminate the HUC and PIQ mechanisms between the rare earths 130 of a nanoparticle 110.

In general, the phrase "average distance d₁" refers to the average separation between each doping ion and its nearest adjacent doping ion (i.e., the average of the distances of each set of two doping ions). In this regard and as depicted in Figure 3, the phrase "average distance d₁" is a useful way to characterize the separation between sets of neighboring doping ions within the nanoparticle's matrix material.

The nanoparticles 110 also have an outer layer (not shown) that is substantially free from rare earths 130 (e.g. a nanoparticle's peripheral portion might not include any rare earths). The outer layer presents a thickness lying in the range 1 nanometer to 2 nanometer. Thus, two rare earths 130 contained in two different nanoparticles 110 are spaced apart by a distance d₂ that is greater than or equal to 2 nanometer, even if the nanoparticles are touching. Thus, in the optical fiber 1 of the invention, the distance d₂ between the rare earths 130 of two different nanoparticles 110 is sufficiently great to eliminate the HUC and PIQ mechanisms between those rare earths 130. In other words, the outer layer serves to reduce or even eliminate the HUC and PIQ mechanisms between the rare earths 130 in two different nanoparticles.

In this regard and as depicted in Figure 3, the phrase "distance d₂" is a useful way to characterize the separation between neighboring rare earths in different nanoparticles within the central core's matrix material.

Most or even all of the nanoparticles 110 present the above-described characteristics: (i) the value of the atom ratio between the number of nanoparticle matrix atoms other than oxygen and the number of atoms of rare earths 130; and (ii) the thickness of the outer layer that is (substantially) free of rare earths 130.

In particular, at least 80 % of the nanoparticles 110, and preferably at least 85 % of the nanoparticles 110 and even more preferably at least 90 % of the nanoparticles 110 or even 95 % of the nanoparticles 110 present the above-described characteristics (e,g,, shapes, dimensions, constituent concentrations, and separation distances).

The characteristics of the nanoparticles 110 may be determined by techniques and apparatuses that make use of light refraction or diffusion. These characteristics may also be confirmed by electron microscope observations. In particular, the thickness of the outer layer may be determined by electron microscopy.

Below, the PIQ mechanism is characterized by the percentage of the rare earths 130 of the optical fiber that are involved in a PIQ mechanism. In other words, the PIQ mechanism is characterized by the percentage of rare earths 130 that are involved in a pair.

In addition, the HUC mechanism is characterized below by the energy transfer rate W_{HUC} expressed in cubic meters per second (m³•s⁻¹).

The rare earth percentage and the energy transfer rate W_{HUC} are obtained from a known model such as the model described in the publication by Marcerou et al. entitled "General theoretical approach describing the complete behavior of the erbium-doped fiber amplifier" published in Proceedings of SPIE, Vol. 1373, pp. 168-186 (1990). The values for rare earth percentage and for transfer rate as presented below were obtained from the model of the Marcerou publication, taking account of the HUC mechanism as shown in Figure 1 and of the PIQ mechanism as shown in Figure 2. Those skilled in the art will recognize that other models for determining the percentage of pairs and the energy transfer rate W_{HUC} may be used.

Typically, the percentage of pairs involved in a PIQ mechanism increases with the concentration of rare earths 130 in the central core 90. In an example of the optical fiber according to the present invention, the percentage of pairs increases more slowly with increasing concentration of rare earths 130 than in a conventional optical fiber doped with a solution of rare earths. In an example of the optical fiber according to the present invention doped with a solution of rare earths, the percentage of pairs increases with rare earth concentration at a slope of 2.31x10⁻²⁵ percent cubic meters (%.m³).

In contrast, an example of the optical fiber according to the present invention has a pair percentage that increases with the concentration of rare earths 130 at a slope of less than 1.45x10⁻²⁵%m³. This reduced pair-percentage-increase slope may be attributed to two factors: (i) the atomic ratio between the number of nanoparticle matrix atoms other than oxygen and the number of atoms of rare earths 130; and (ii) the outer layer of the nanoparticles 110.

Typically, the energy transfer rate W_{HUC} associated with the HUC mechanism increases with increasing rare earth concentration. An example of the optical fiber of the present invention has an energy transfer rate W_{HUC} that remains substantially constant with increasing concentration of rare earths 130 for at least two reasons: (i) the atomic ratio between the number of nanoparticle matrix atoms other than oxygen and the number of atoms of rare earths 130; and (ii) the outer layer of the nanoparticles. In other words, the energy transfer rate W_{HUC} does not vary significantly with rare earth concentration. For example, the energy transfer rate W_{HUC} remains constant to within plus or minus 0.1x10⁻²⁴ m³•s⁻¹. The value of the energy transfer rate W_{HUC} depends on the value of the atomic ratio between the number of nanoparticle matrix atoms other than oxygen and the number of atoms of rare earths 130.

When the example of the optical fiber according to the invention is used for amplifying an optical signal, the attenuation of the PIQ and HUC mechanisms enables pump signal power losses to be reduced. Thus, the pump power required to obtain given gain is decreased. This achieves an energy saving, reduces operating costs, and provides greater reliability for the system including the optical fiber.

By way of example, the nanoparticle's outer layer is made of silica or of alumina or a combination of both. In an embodiment, the outer layer and the matrix 120 of the nanoparticles 110 have the same composition.

The concentration of rare earths 130 serves to obtain a given amplification gain. In the optical fiber 1 according to the present invention the PIQ and HUC mechanisms are attenuated, or even eliminated. Thus, in the optical fiber 1 according to the invention, the concentration of rare earths 130 is not limited by the interaction mechanisms between two neighboring rare earths.

Thus, in an embodiment, the optical fiber according to the invention has a strongly-doped central core 90 while also having PIQ and HUC mechanisms that are attenuated by the atomic ratio between the number of nanoparticle matrix atoms other than oxygen and the number of atoms of rare earths 130, and because of the outer layer of each nanoparticle 110. In this embodiment, the concentration of rare earths 130 in the central core 90 lies for example in the range 250 ppm to 1500 ppm, or in the range 500 ppm to 1000 ppm. In a particular example, the central core 90 presents a concentration of rare earths 130 of 1400 ppm, a percentage of pairs that is less than 4%, and an energy transfer rate W_{HUC} of less than 0.5x10⁻²⁴ m³.s⁻¹.

In the central core 90 of the optical fiber 1, the nanoparticle matrix 120 of the nanoparticles 110 presents a concentration lying in the range 0.5 weight% to 5 weight%, and preferably 1.5 weight% to 4 weight%.

The nanoparticles 110 present dimensions that facilitate incorporation into the central core 90. For example, the nanoparticles 110 are substantially spherical in shape with a diameter lying in the range 5 nanometer to 50 nanometer. In this example, most or even all of the nanoparticles 110 present a shape that is substantially spherical with a diameter lying in the range 5 nanometer to 50 nanometer.

In general, at least 80 percent (e.g., at least 85 percent) of the nanoparticles 110 - and typically 90 percent (e.g., at least 95 percent) of the nanoparticles 110 - exhibit the nominal nanoparticle characteristics (e.g., shapes, dimensions, constituent concentrations, and separation distances).

The rare earths 130 used in the context of the present invention are, for example: erbium Er, ytterbium Yb, thulium Tm, or a combination thereof, or indeed any other rare earth enabling amplification by optical pumping.

When the optical fiber 1 is used to amplify a signal, the gain of the amplifier depends on the rare earths used and on their concentrations. In addition, the optical fiber 1 according to the present invention may be for use in other applications such as a laser.

An example of an optical fiber 1 according to the present invention suitable for amplifying an optical signal is described below. The example of the optical fiber 1 presents a central core 90 with erbium at a concentration of 600 ppm by weight. The nanoparticle matrix 120 is made of alumina and presents a concentration in the central core 90 of 3.5 weight%. The alumina contributes to the amplification gain shape. The nanoparticles 110 present a mean diameter of 25 nanometer. In this example of the optical fiber 1, the nanoparticles 110 have an atom ratio of aluminum to erbium of 400 and an outer layer of pure alumina with a thickness of 1 nanometer, thus making it possible to guarantee a distance between two erbium atoms that is greater than 2 nanometer. Thus, the example of the optical fiber 1 presents a pair percentage of less than 3% and an energy transfer rate W_{HUC} of less than 0.5x10⁻²⁴ m³.s⁻¹.

The example of the optical fiber 1 described above is fabricated using an MCVD technique. The method of fabricating this example of the optical fiber according to the present invention is described below.

The method comprises a step of depositing successive silica-based sintered layers at a temperature of 2000°C on the inside surface of a silica tube. These sintered layers form the optical cladding of the optical fiber 1 obtained after a drawing step.

The method then comprises depositing a porous silica-based layer on the previously deposited inside surface. The porous layer forms a central core 90 of the optical fiber 1 after drawing. The porous layer is deposited at a lower temperature in order to avoid vitrifying the layer. For example, the temperature is about 1400°C.

The porous layer is then impregnated with a suspension of nanoparticles 110 in a conventional solvent that may advantageously be water or ethanol. Impregnation is performed at ambient temperature, preferably by a liquid doping technique that is fully compatible with MCVD technology.

The concentration by weight of rare earths 130 in the central core 90 of the optical fiber 1 as obtained after drawing is adjusted by varying the concentration of the rare earths 130 in the aqueous solution. In this example, the suspension presents an erbium concentration of 1.75x10⁻³ moles per liter (mol/L), thus making it possible to obtain an erbium concentration of 600 ppm by weight in the central core 90 after the optical fiber 1 has been drawn.

The impregnated, porous layer is subsequently sintered at a temperature of 2000°C.

The deposition tube containing the successive deposits is then collapsed in order to obtain a primary preform.

Thereafter, the primary preform is sleeved with silica tubes so as to adjust the diameter of the core and the ratio between the central core 90 and the optical cladding 200 to predetermined values. This produces a secondary preform.

The example of the optical fiber according to the present invention is subsequently obtained by a step of drawing the secondary preform.

The nanoparticles 110 are synthesized by a gentle chemical technique that encourages the formation of thermodynamically stable stoichiometric structures and facilitates control over the size and the composition of the nanoparticles 110. A standard method may be used for chemically synthesizing the nanoparticles 110 in an aqueous solution at controlled pH, by co-precipatating precursors of alumina salts and rare earth salts. The atomic ratio between the number of nanoparticle matrix atoms other than oxygen and the number of atoms of rare earths 130 in the nanoparticle is defined at this stage by adjusting the weights of the various precursor reactions, on the basis of their molecular weight and of the intended atomic ratio. For example, it is possible to use inorganic salts (e.g., nitrates or chlorides) as precursors of alumina, and organic salts (e.g., acetyl acetonate or acetate) as precursor of erbium, ytterbium, or thulium.

The nanoparticles 110 are subsequently coated with an outer layer to a thickness of 1 nanometer by using chemical or physical synthesis.

After the outer layer has been deposited, the nanoparticles 110 are washed by centrifuging and dispersed in a conventional solvent, advantageously water or ethanol.

To ensure that the matrix 120 of the nanoparticles is conserved in the final fiber and remains capable of constituting a physical barrier between the rare earths 130 and crystal defects of the matrix 100 of the central core 90, it is important for the nanoparticle materix 120 to be capable of withstanding the conditions (temperature and stress) of fabricating the optcal fiber. Thus, for certain nanoparticle matrices 120, it is possible to provide a step of thermally densifying the nanoparticles 110, after they have been incorporated in the porous layer of the primary preform by impregnation, and before the layer that has been doped in this way is sintered (or vitrified). The tube may thus be subjected to heat treatment at a temperature greater than 1000°C for at least one hour, in order to reinforce the structure of the nanoparticles 110 in the central core 90.

The invention also provides, in another aspect, an optical amplifier having at least one portion of the optical fiber according to the present invention, and using a pump power lying in the range 60 mW to 1.5 W. Compared with a conventional amplifier, the length of fiber used is shortened since the optical fiber according to the present invention can accommodate rare earths at a concentration that is very high. Thus, the dimensions of the amplifier are reduced compared with a conventional amplifier. Furthermore, the attenuation due to the HUC and PIQ mechanisms serves to reduce losses of the pump signal. Optical pumping is thus more efficient.

The invention also provides, in yet another aspect, an optical fiber laser having at least one portion of the optical fiber according to the present invention.

Typically, an optical fiber laser comprises a portion of optical fiber in combination with a resonant cavity constituted by a system of mirrors or of Bragg gratings. The wavelength and the power of the optical fiber laser depend on the rare earths used and on its concentration in the optical fiber.

Compared with a prior art optical fiber laser, the length of optical fiber used is shorter since the optical fiber according to the present invention accommodates rare earths at a concentration that is high. The optical fiber according to the present invention serves to reduce the non-linear effects of the laser that depend on the length of optical fiber used.

The above-described example of the optical fiber according to the present invention is not limiting on the possible applications according to the present invention. In particular, the optical fiber according to the present invention may be made using nanoparticles 110 presenting a matrix 120 other than an alumina matrix and doped with rare earths 130 other than erbium.

The optical fiber 1 according to the present invention is not limited to the embodiment in which the concentration of rare earths 130 is high. The optical fiber according to the present invention may present a concentration of rare earths 130 lying in the range 250 ppm to 1500 ppm, while still attenuating or eliminating the PIQ and HUC mechanisms.

## Claims

1. An optical fiber (1) comprising:
• a central core (90) comprising a core matrix (100) and nanoparticles (110); said core matrix (100) surrounding said nanoparticles (110); said central core (90) adapted to conveying an optical signal; and
• an optical cladding (200) surrounding said central core (90) and adapted to confine the optical signal conveyed in the central core (90);
wherein said nanoparticles (110) comprise rare-earth dopant elements (130), a nanoparticle matrix (120) and an outer layer; said nanoparticle matrix (120) surrounding said rare-earth dopant elements (130) and said outer layer surrounding said nanopatricle matrix (120); **characterized in that**
• within said nanoparticles, the atomic ratio of nanoparticle matrix atoms other than oxygen to rare-earths dopant element (130) atoms is between 300 and 1000; and
• said outer layer is formed of an outer layer matrix that is substantially free from any rare-earth dopant element (130) atoms, and said outer layer has a thickness of between 1 nanometer and 2 nanometer.

2. The optical fiber (1) according to claim 1, wherein the core matrix (100) is made of silica.

3. The optical fiber (1) according to claim 1 or claim 2, wherein the nanoparticle matrix (120) comprises alumina (Al₂O₃) and/or silica (SiO₂).

4. The optical fiber (1) according to any preceding claim, wherein the outer layer matrix is made of alumina (Al₂O₃) and/or silica (SiO₂).

5. The optical fiber (1) according to any preceding claim, wherein the rare-earth-dopant elements (130) are erbium (Er); ytterbium (Yb); thulium (Tm); or a combination thereof.

6. The optical fiber (1) according to any preceding claim, wherein, within the nanoparticles (110) the atomic ratio of nanoparticle matrix (120) atoms other than oxygen and rare-earth-dopant element (130) atoms is between 350 and 550.

7. The optical fiber (1) according to any preceding claim, wherein, within the central core (90), the concentration of the nanoparticle matrix (120) is between 0.5 weight percent and 3.5 weight percent.

8. The optical fiber (1) according to any preceding claim, wherein the nanoparticles (110) are substantially spherical and have diameters of between 5 nanometer and 50 nanometer.

9. The optical fiber (1) according to any preceding claim, wherein, within the central core (90), the concentration of rare-earth-dopant elements (130) is between 250 parts per million (ppm) and 1500 ppm.

10. The optical fiber (1) according to any preceding claim, wherein the core matrix (100) comprises an additional dopant that contributes to a refractive index difference between the central core (90) and the optical cladding (200).

11. The optical fiber (1) according to claim 10, wherein the additional dopant is selected from: germanium; fluorine; aluminum; phosphorous; or a combination thereof.

12. An optical fiber laser including at least one portion of fiber (1) according to any one of claims 1 to 11.

13. An optical amplifier including at least one portion of fiber (1) according to any one of claims 1 to 11, wherein the optical amplifier provides amplification at a pump power of between 60 mW and 1.5 W.

## Patentansprüche

1. Lichtwellenleiter (1) mit:
• einem zentralen Kern (90), der eine Kernmatrix (100) und Nanopartikel (110) umfasst, wobei die Kernmatrix (100) die Nanopartikel (110) umgibt und der zentrale Kern (90) dazu geeignet ist, ein optisches Signal zu übertragen, und
• einem optischen Mantel (200), der den zentralen Kern (90) umgibt und dazu geeignet ist, das im zentralen Kern (90) übertragene optische Signal einzugrenzen;
wobei die Nanopartikel (110) Seltene Erden-Dotierelemente (130), eine Nanopartikelmatrix (120) und eine Außenschicht umfassen, wobei die Nanopartikelmatrix (120) die Seltene Erden-Dotierelemente (130) umgibt und die Außenschicht die Nanopartikelmatrix (120) umgibt,
**dadurch gekennzeichnet, dass** innerhalb der Nanopartikel das Atomverhältnis von Atomen der Nanopartikelmatrix, mit Ausnahme von Sauerstoff, zu den Atomen der Seltene Erden-Dotierelemente (130) zwischen 300 und 1000 beträgt, und dass die Außenschicht durch eine Außenschichtmatrix gebildet ist, die im Wesentlichen frei von Atomen der Seltene Erden-Dotierelemente (130) ist, und wobei die Dicke der Außenschicht zwischen 1 Nanometer und 2 Nanometer beträgt.

2. Lichtwellenleiter (1) nach Anspruch 1, wobei die Kernmatrix (100) aus Siliciumdioxid gebildet ist.

3. Lichtwellenleiter (1) nach Anspruch 1 oder 2, wobei die Nanopartikelmatrix (120) Aluminiumoxid (Al₂O₃) und/oder Siliciumdioxid (SiO₂) umfasst.

4. Lichtwellenleiter (1) nach einem der vorhergehenden Ansprüche, wobei die Außenschichtmatrix aus Aluminiumoxid (Al₂O₃) und/oder Siliciumdioxid (SiO₂) gebildet ist.

5. Lichtwellenleiter (1) nach einem der vorhergehenden Ansprüche, wobei die Seltene Erden-Dotierelemente (130) Erbium (Er), Ytterbium (Yb), Thulium (Tm) oder eine Kombination daraus sind.

6. Lichtwellenleiter (1) nach einem der vorhergehenden Ansprüche, wobei innerhalb der Nanopartikel (110) das Atomverhältnis von Atomen der Nanopartikelmatrix (120), mit Ausnahme von Sauerstoff, zu den Atomen der Seltene Erden-Dotierelemente (130) zwischen 350 und 550 beträgt.

7. Lichtwellenleiter (1) nach einem der vorhergehenden Ansprüche, wobei innerhalb des zentralen Kerns (90) die Konzentration der Nanopartikelmatrix (120) zwischen 0,5 Gewichtsprozent und 3,5 Gewichtsprozent beträgt.

8. Lichtwellenleiter (1) nach einem der vorhergehenden Ansprüche, wobei die Nanopartikel (110) im Wesentlichen kugelförmig sind und Durchmesser zwischen 5 Nanometer und 50 Nanometer aufweisen.

9. Lichtwellenleiter (1) nach einem der vorhergehenden Ansprüche, wobei innerhalb des zentralen Kerns (90) die Konzentration der Seltene Erden-Dotierelemente (130) zwischen 250 Teile pro Million (ppm) und 1500 ppm beträgt.

10. Lichtwellenleiter (1) nach einem der vorhergehenden Ansprüche, wobei die Kernmatrix (100) einen zusätzlichen Dotierstoff umfasst, der zu einem Brechungsindexunterschied zwischen dem zentralen Kern (90) und dem optischen Mantel (200) beiträgt.

11. Lichtwellenleiter (1) nach Anspruch 10, wobei der zusätzliche Dotierstoff aus der folgenden Gruppe ausgewählt ist: Germanium, Fluor, Aluminium, Phosphor oder einer Kombination daraus.

12. Lichtwellenleiterlaser, der wenigstens zum Teil einen Lichtwellenleiter (1) nach einem der vorhergehenden Ansprüche 1 bis 11 umfasst.

13. Optischer Verstärker, der wenigstens zum Teil einen Lichtwellenleiter (1) nach einem der vorhergehenden Ansprüche 1 bis 11 umfasst, wobei der optische Verstärker bei einer Pumpenergie zwischen 60 mW und 1,5 W eine Verstärkung bereitstellt.

## Revendications

1. Fibre optique (1) comprenant :
- un coeur central (90) comprenant une matrice de coeur (100) et des nanoparticules (110) ; ladite matrice de coeur (100) entourant lesdites nanoparticules (110) ; ledit coeur central (90) étant adapté à transmettre un signal optique ; et
- une gaine optique (200) entourant ledit coeur central (90) et adapté à confiner le signal optique transmis dans le coeur central (90) ;
dans laquelle lesdites nanoparticules (110) comprennent des éléments dopants du groupe des terres rares (130), une matrice de nanoparticule (120) et une couche externe, ladite matrice de nanoparticule (120) entourant lesdits éléments dopants du groupe des terres rares (130) et ladite couche externe entourant ladite matrice de nanoparticule (120) ; **caractérisée en ce que**
- au sein desdites nanoparticules, le rapport atomique entre le nombre d'atomes de la matrice de nanoparticule autres que l'oxygène et le nombre d'atomes de terres rares (130) est compris entre 300 et 1000 ; et
- ladite couche externe consiste enune matrice de couche externe sensiblement dépourvue de tout atome de terres rares (130), et ladite couche externe ayant une épaisseur comprise entre 1 nanomètre et 2 nanomètres.

2. Fibre optique (1) selon la revendication 1, dans laquelle la matrice de coeur (100) est de la silice.

3. Fibre optique (1) selon la revendication 1 ou 2, dans laquelle la matrice de nanoparticule (120) comprend de l'alumine (Al₂O₃) et/ou de la silice (SiO₂).

4. Fibre optique (1) selon l'une quelconque des revendications précédentes, dans laquelle la matrice de couche externe est de l'alumine (Al₂O₃) et/ou de la silice (SiO₂).

5. Fibre optique (1) selon l'une quelconque des revendications précédentes, dans laquelle les éléments dopants du groupe des terres rares (130) sont l'erbium (Er) ; l'ytterbium (Yb) ; le thulium (Tm) ; ou une combinaison de ceux-ci.

6. Fibre optique (1) selon l'une quelconque des revendications précédentes, dans laquelle, au sein des nanoparticules (110), le rapport atomique entre le nombre d'atomes de la matrice de nanoparticule (120) autres que l'oxygène et le nombre d'atomes de terres rares (130) est compris entre 350 et 550.

7. Fibre optique (1) selon l'une quelconque des revendications précédentes, dans laquelle, au sein du coeur central (90), la concentration de la matrice de nanoparticule (120) est compris entre 0,5 pour cent en poids et 3,5 pour cent en poids.

8. Fibre optique (1) selon l'une quelconque des revendications précédentes, dans laquelle les nanoparticules (110) sont sensiblement sphériques avec un diamètre compris entre 5 nanomètres et 50 nanomètres.

9. Fibre optique (1) selon l'une quelconque des revendications précédentes, dans laquelle, au sein du coeur central (90), la concentration en éléments dopants du groupe des terres rares (130) est comprise entre 250 parties par million (ppm) et 1500 ppm.

10. Fibre optique (1) selon l'une quelconque des revendications précédentes, dans laquelle la matrice de coeur (100) comprend un dopant supplémentaire qui contribue à la différence d'indices de réfraction entre le coeur central (90) et la gaine optique (200).

11. Fibre optique (1) selon la revendication 10, dans laquelle le dopant supplémentaire est choisi parmi du germanium ; du fluor ; de l'aluminium ; du phosphore ; ou une combinaison de ceux-ci.

12. Laser à fibre optique, comprenant au moins une portion de fibre (1) selon l'une quelconque des revendications 1 à 11.

13. Amplificateur optique, comprenant au moins une portion de fibre (1) selon l'une quelconque des revendications 1 à 11, dans lequel l'amplificateur optique fournit une amplification à une puissance de pompe comprise entre 60 mW et 1,5 W.
